# EUROPEAN PATENT APPLICATION

(11) **EP 2 530 313 A1**
(43) Date of publication of application: **05.12.2012**
(21) Application number: 10703609.7
(22) Date of filing: 12.02.2010
(51) Int. Cl.: F03D 11/02

(54) **STEP-UP GEAR DEVICE FOR WIND-DRIVEN ELECTRICITY GENERATION DEVICE, AND WIND-DRIVEN ELECTRICITY GENERATION DEVICE**

(71) Applicant: Mitsubishi Heavy Industries, Ltd., Tokyo 108-8215 (JP)
(72) Inventor: NAKASHIMA, Keita, Tokyo 108-8215 (JP); IWASAKI, Kaoru, Tokyo 108-8215 (JP); YOSHIDA, Takafumi, Tokyo 108-8215 (JP); TAKEUCHI, Hiroaki, Tokyo 108-8215 (JP); SHODA, Katsuhiko, Tokyo 108-8215 (JP)
(74) Representative: Intès, Didier Gérard André
(86) International application number: PCT/JP2010/052094
(87) International publication number: WO 2011/099148

(57) **Abstract**

The present invention provides a gear box for a wind turbine generator which can reduce damage by flaking even when a self-aligning roller bearing is adopted as a planet bearing and a wind turbine generator. The gear box 14 comprises a casing 40; a carrier 52; a plurality of planet pins 54 supported to the carrier 52; self-aligning roller bearings 56 held on the planet pins 54, respectively; the planet gears 58 supported to the planet pins 54 via the self-aligning roller bearing 56, respectively; and a ring gear 60 and a sun gear 62 meshed with the planet gears 58. The planet gears 58 are fixed to the outer race 56B of the self-aligning bearing 56 with an interference fit, respectively, so that each end surface of the outer race 56B of the self-aligning bearing 56 is positioned inner side to an end surface of each planet gears 58.

## Description

### BACKGROUND OF THE INVENTION

### Field of the Invention

The present invention relates to a gear box for a wind turbine generator and a wind turbine generator utilizing a gear box. In particular, the invention relates to a gear box for a wind turbine generator that increases rotational speed input from blades via main shaft to output to the generator side, and a wind turbine generator that uses the gear box.

### Description of the Related Art

In recent years, the use of a wind turbine generator to generate renewable energy has become popular.

In general, a wind turbine generator comprises a rotor head equipped with blades, a nacelle accommodating a drive train and a generator, and a tower supporting the nacelle. The drive train is for transmitting a torque from the rotor head side to the generator side, and usually includes a gear box so that rotational speed of the rotor head is increased to transmit to the generator.

As a gear box for the wind turbine generator, a planetary gear mechanism, as described in Japanese Unexamined Patent Application Publication No. 2009-144533, is well known. In the planetary gear mechanism, a plurality of planet pins rotating with a main shaft of the rotor head side is provided. A plurality of planet gears is supported to the planet pins via planetary bearing, and a ring gear and a sun gear are meshed to the planet gears. By this arrangement, the planet gears revolve around the sun gear with rotating so as to output increased rotational speed to the sun gear side.

Since the wind power applied to the blades of the wind turbine generator always changes, the bearing for supporting the blades needs to be able to withstand such changes although this is not described in Japanese Unexamined Patent Application Publication No. 2009-144533. One possible measure is adopting a self-aligning roller bearing.

As such self-aligning roller bearing, for example, the bearing shown in Japanese Unexamined Patent Application Publication No. H9-317760 is known, in which two rows of rollers are held by a holder between an inner race and an outer race so that the center of the track of the outer race coincides with the center of the bearing to achieve a self-aligning.

### SUMMARY OF THE INVENTION

The present inventors have recognized that when using the self-aligning roller bearing described above in a conventional wind turbine generator, the endurance time of the bearings may become shorter due to the flaking.

Accordingly, the present invention was made to solve the above problems, by providing a gear box for a wind turbine generator and a wind turbine generator, which suppress the decline of the endurance time of the bearings caused by the flaking even when a self-aligning roller bearing is adopted as a planet bearing.

In relation to one embodiment of the present invention, the present invention provides a gear box for a wind turbine generator having a main shaft coupled to a rotor head equipped with blades and rotated with the rotor head, comprising: a casing; a carrier having a plurality of planet pins and rotating with the main shaft of the wind turbine generator to revolve the planet pins; self-aligning roller bearings installed to the pins of the carrier, respectively, each of the self-aligning roller bearings including a plurality of rows of rollers provided between an inner race and an outer race; a plurality of planet gears supported rotatably to the planet pins via the self-aligning roller bearings, respectively; a ring gear provided in the casing and having a inner tooth meshed with the planet gears; and a sun gear provided to be surrounded by the planet gears and meshed with the planet gears, wherein the planet gears are fixed to each outer race of the self-aligning bearings with an interference fit, respectively, so that an end surface of each outer race of the self-aligning bearings is positioned inner side of an end surface of each planet gear.

As a result of research, it was uncovered by the inventors that the decline of the endurance time of the bearings occurred, when adopting the self-aligning roller bearing as the planet bearing, was caused by changes of the load transmitted to the planet bearings (self-aligning roller bearings) via the blades, the rotor head and the main shaft whereby the outer race of the bearing comes out to outward in its axial direction and therefore the load acted on each row of bearings is imbalanced with each other.

The gear box for the wind turbine generator of the present invention mentioned above is based on this knowledge, and the planet gears are fixed to each outer race of the self-aligning bearings with an interference fit, respectively, so that an end surface of each outer race of the self-aligning bearings as planet bearings is positioned inner side of an end surface of each planet gears. Thereby, the end portion of each planet gear is deformed by the interference fit to work as a lid to prevent the outer race of the self-aligning roller bearing from coming out and to maintain the load acted on each row of bearings to even, and finally the decline of the endurance time of the self-aligning roller bearings (planet bearings) caused by the flaking can be suppressed.

In the above gear box for the wind turbine generator, the planet gears are preferably fixed to each outer race of the self-aligning roller bearings with a shrink fit or a cooling fit.

According to such arrangement, each end portion of the planet gears is deformed more so as to prevent each outer race of the self-aligning roller bearings from coming out more effectively, and thus the damage of the self-aligning roller bearings can be reduced more firmly.

In the above gear box for the wind turbine generator, each of the planet gears is preferably supported to the planet pin by a pair of the self-aligning roller bearings arranged with keeping a distance from each other, wherein the planet pin comprises an oil inlet port provided in a position between the pair of self-aligning roller bearings so as to lead lubricating oil into the pair of self-aligning roller bearings.

According to such arrangement, each of the planet gears is supported to the planet pin by the pair of the self-aligning roller bearings so that the load acted on each of the bearings can be spread to both of the bearings, and thus the life of the bearing can be extended. Further, since the planet pin comprises the oil inlet port in the position between the pair of the self-aligning roller bearings, the pair of the self-aligning roller bearings can be maintained in the lubrication state.

A gear box for a wind turbine generator regarding another embodiment of the present invention, having a main shaft coupled to a rotor head equipped with blades and rotated with the rotor head, comprises: a casing; a carrier having a plurality of planet pins and rotating with the main shaft of the wind turbine generator to revolve the planet pins; self-aligning roller bearings installed to the pins of the carrier, respectively, each of the self-aligning roller bearings including a plurality of rows of rollers provided between an inner race and an outer race; a plurality of planet gears supported rotatably to the planet pins via the self-aligning roller bearings, respectively; a ring gear provided in the casing and having a inner tooth meshed with the planet gears; and a sun gear provided to be surrounded by the planet gears and meshed with the planet gears, wherein each of the planet gears comprises a flange portion provided so as to prevent the outer race of the self-aligning roller bearing from coming out.

According to such arrangement, the flange portion is provided in the inner surface of the planet gear. Therefore, each outer race of the self-aligning roller bearings can be prevented from coming out, and thus the decline of the endurance time of the self-aligning roller bearings (planet bearings) can be suppressed.

In this case, it is possible to adopt, as the flange portion, a C-shaped snap ring fit into a groove provided in the inner surface of the planet gear, or a ring member screwed with a female screw provided in the inner surface of the planet gear.

In another aspect of the present invention, the present invention provides a wind turbine generator comprising: a rotor head equipped with blades; a main shaft coupled to the rotor head and rotating with rotor head; the gear box described above for increasing rotation speed input from the main shaft to transmit the increased rotation speed to an output shaft; and an generator coupled to the output shaft of the gear box.

In this wind turbine generator, if the gear box of the first embodiment described above is used, each of the planet gears are fixed to each outer race of the self-aligning roller bearings with an interference fit so that the end surface of each outer race of the self-aligning roller bearings as planet bearings is positioned inner side of an end surface of each planet gear. Thereby, the end portion of the planet gear is deformed by the interference fit to work as a lid to prevent the outer race of the self-aligning roller bearing from coming out and to maintain the load acted on each row of bearings to even, and finally damage of the self-aligning roller bearings (planet bearings) can be reduced.
If the gear box of the second embodiment is used, the flange portion is provided in the inner surface of the planet gear so as to prevent the outer race of the self-aligning roller bearing from coming out and suppress the decline of the endurance time of the self-aligning roller bearing (planet bearing) caused by the flaking.

In one embodiment of the present invention, each of the planet gears are fixed to each outer race of the self-aligning roller bearings with an interference fit so that the end surface of each outer race of the self-aligning roller bearing as a planet bearing is positioned inner side to an end surface of each planet gear. Thereby, the end portion of the planet gear is deformed by the interference fit to work as a lid to prevent the outer race of the self-aligning roller bearing from coming out and to maintain the load acted on each row of bearings to even, and finally the decline of the endurance time of the self-aligning roller bearings (planet bearings) caused by the flaking can be suppressed.

### BRIEF DESCRIPTION OF THE DRAWINGS

FIG. 1 is a diagram showing an example of the overall construction of a wind turbine generator according to an embodiment of the present invention.
FIG. 2 is a perspective view showing a drive train and a generator provided within a nacelle.
FIG. 3 is a sectional view showing an example of a gear box.
FIG. 4 is a sectional view along lines I-I of Fig. 3.
FIG. 5 is an enlarged view showing around the self-aligning roller bearing of Fig. 3.
FIG. 6 is a sectional view showing coming out of the outer race of the self-aligning roller bearing.
FIG.7 is an enlarged sectional view of the self-aligning roller bearing (planet bearing) of FIG.5
FIG. 8(a) is a sectional view showing the planet gear equipped with the flange portion. Figs. 8(b) and 8(c) are enlarged views showing an example of structure of flange portions, respectively.
FIG. 9 is a graphic diagram showing the test result of the coming out amount of the outer race of the bearing in a sample 1 and a comparative sample 1.

### DETAILED DESCRIPTION OF THE PREFERRED EMBODIMENTS

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present.

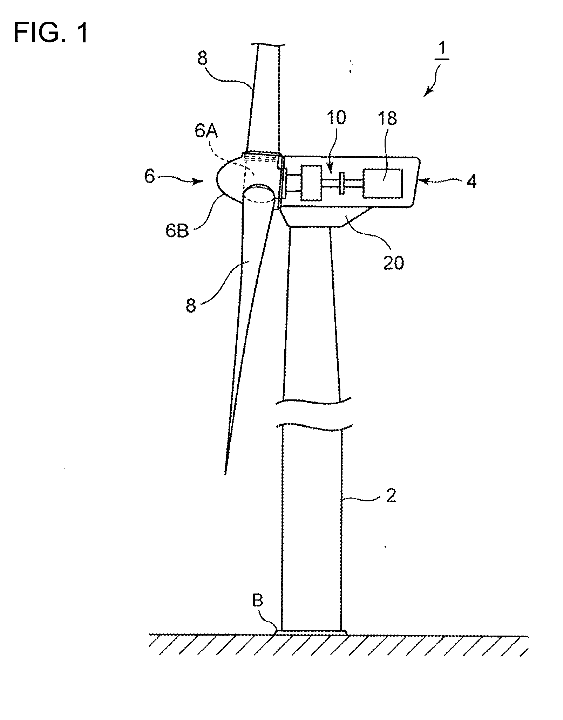

FIG. 1 is a diagram showing an example of the overall construction of a wind turbine generator according to the embodiment. A wind turbine generator 1 mainly includes, as shown in FIG. 1, a tower 2 provided to stand on a foundation B, a nacelle 4 provided on the upper end of the tower 2, a rotor head 6 provided on the nacelle 4, and a plurality of blades 5 attached to the rotor head 6.

As shown in FIG. 1, the tower 2 has a column-like shape extending upwardly from the foundation B. The tower 2, for example, can be made from a single column-like member or made from a plurality of units aligned in upright direction and coupled each other. If the tower 2 is made from the plurality of units, the nacelle 4 is provided on the unit located on the top of the tower 2.

The nacelle 4 supports the rotor head 6 and accommodates a drive train 10 and a generator 18, etc.

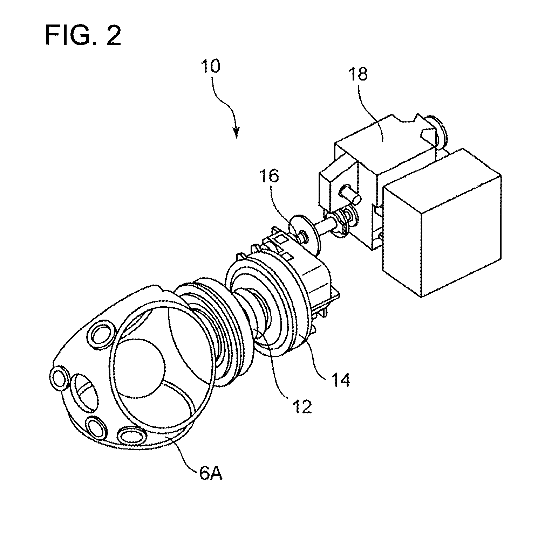

FIG. 2 is a perspective view showing the detail of the inside of the nacelle 4a with a nacelle cover detached. The drive train 10 includes, as shown in Fig. 2, a gear box 14 provided between the rotor head 6 and the generator 18, the gear box 14 includes a main shaft 12 connected to a rotor hub 6A of the rotor head 6 and a final output shaft 16 connected to the generator 18. This gear box 14 increases the rotational speed approximate 20 rpm input to the main shaft 12 from the rotor head 6 up to the rotational speed approximate 1800 rpm, then outputs to the final output shaft 16.

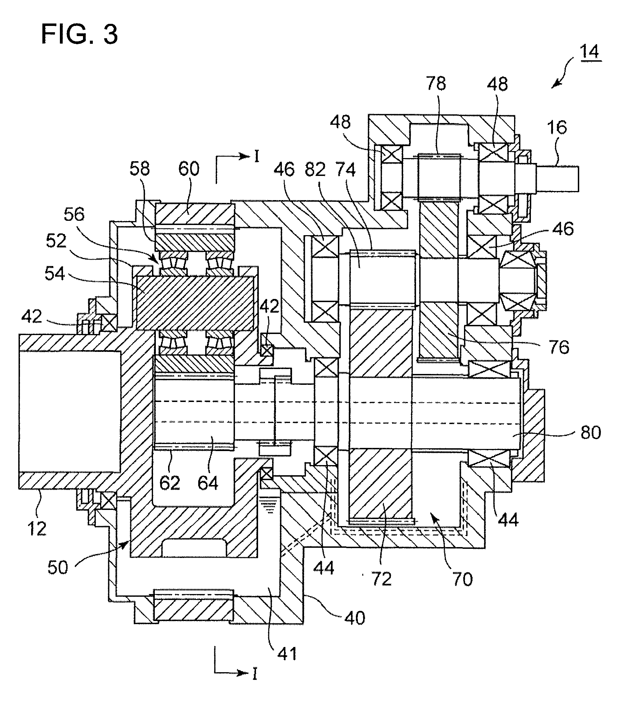

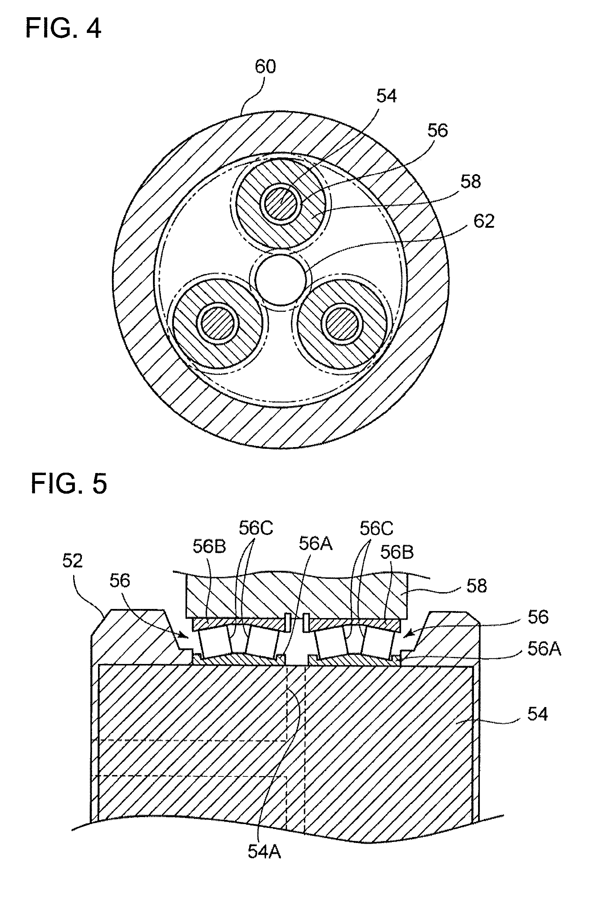

Next, the detailed structure of the gear box 14 of the wind turbine generator 1 will be described. FIG. 3 is a sectional view showing an example of the gear box 14. FIG. 4 is a sectional view along lines I-I of Fig.36. FIG. 5 is an enlarged view showing around the self-aligning roller bearing (planet bearing) of the gear box 14 shown in Fig. 3.

As shown in Fig. 3, the gear box 14 includes a planetary gear type speed increasing mechanism 50 and a spur gear type speed increasing mechanism 70, accommodated within the casing 40. This gear box 14 increases rotation speed input from the main shaft 12 of the rotor hub side and transmits the speed increased rotation to the final output shaft 16.

The planetary gear type speed increasing mechanism 50 of the gear box 14 includes, as shown in Figs.3 and 4, a carrier 52, a plurality of planet pins 54 held to the carrier 52, a plurality of self-aligning roller bearings 56 supported to the planet pins 54, respectively, a plurality of planet gears 58 supported to the planet pin 54s via the self-aligning roller bearings 56, respectively, and a ring gear 60 and a sun gear 62 meshed with the planet gears 58.

The carrier 52 is a supporting plate for supporting the plurality of the planet pins 54 (three pins in this example), and rotated integrally with the main shaft 12 of the rotor head side so that the carrier 53 revolves the planet pins 54. The main shaft 12 and the carrier 52 are supported rotatably to the casing 40 via a bearing 42.

The self-aligning roller bearing 56 performs a role as a planet bearing for supporting rotatably the planet gear 58 to the planet pin 54, and includes a plurality of rows of the rollers 56C (two rows in this example) provided between an inner race 56A and an outer race 56B as shown in FIG.5.

The planet pin 54 is fitted into an inner race 56A of the self-aligning roller bearing 56, and an outer race 56B of the self-aligning roller bearing 56 is fitted into the planet gear 58. For example, the planet pin 54 is fixed to the inner race 56A of the self-aligning roller bearing 56 with a clearance fit, and the outer race 56B of the self-aligning roller bearing 56 is fixed to the planet gear 58 with an interference fit.

In the self-aligning roller bearing 56, the center of the track of the outer race 56B coincides with the center of the bearing to exercise self-aligning characteristics. Thus, the self-aligning roller bearing 56 is proper to experience vibration or impact load, and thereby preferable to be used as a planet bearing of the wind turbine generator that the wind power acting to the blades continuously changes.

It is possible to use a plurality of the self-aligning roller bearings 56 arranged parallel with each other as shown in Figs. 3 and 5, when being applied to a large-size wind turbine generator. In such case, as illustrated in FIG.5, it is preferable to provide the plurality of the self-aligning roller bearings with keeping a distance from each other, further to provide a oil inlet port 54A on the planet pin 54 in a position between the adjacent self-aligning roller bearings 56 for leading lubricating oil into the pair of self-aligning roller bearings. Thus, the self-aligning roller bearings 56 can be maintained in the lubrication state.

The planet gears 58 shown in Figs. 3 and 4 are supported to the planet pins 54 via the self-aligning roller bearing 56, respectively, and meshed with the ring gear 60 and a sun gear 62.

As shown in Fig. 3, the ring gear 60 is provided on the casing 40, and includes an inner teeth meshed with the planet gears 58. On the other hand, the sun gear 62 is, as shown in Fig. 4, provided to be surrounded by a plurality of the planet gears 58. A planetary output shaft 64 is fitted into the sun gear 62.

In this planetary type speed increasing mechanism 50, the planet pins 54 and the planet gears 58 supported on the planet pins 54 are revolved around the sun gear 62 as a center, when the carrier 52 is rotated with the main shaft 12. At the same time, each of the planet gears 58 is rotated around each of the planet pins 54 as a center via each of the self-aligning roller bearings 56 as a planet bearing. Thus, the rotational speed input from the main shaft 12 as an input shaft is increased and output to the planetary output shaft 64. The speed increasing ratio of the planetary type speed increasing mechanism 50 is defined by each number of teeth of the planet gear 58, the ring gear 60 and the sun gear 62.

The casing 40 includes, as shown in Fig. 3, an oil bath 41 provided below the planetary type speed increasing mechanism 50, and lubrication oil is reserved in the oil bath 41. Each of the planet gears 58 supported to the planet pin 54 via the self-aligning roller bearing 54 is soaked in the lubrication oil within the oil bath 41, when each of the planet gears moves down by the revolution. Thus, the self-aligning roller bearings 56 and the planet gears 58 can be maintained in the lubrication state.

The spur gear type speed increasing mechanism 70 shown in Fig. 3 is a gear box optionally provided in addition to the planetary gear type speed increasing mechanism 50, and increases the rotational speed of the planetary output shaft 64 and outputs to the final output shaft 16.

The spur gear type speed increasing mechanism 70 includes, for example as shown in Fig. 3, two gear sets comprising a gear set of a first spur gear 72 and a second spur gear 74 meshed with each other, and a gear set of a third spur gear 76 and a fourth spur gear 78 meshed with each other. The first spur gear 72 is fixed to a first rotational shaft 80 connected to the planetary output shaft 64, the second spur gear 74 and the third spur gear 76 are fixed to a second rotational shaft 82, and the fourth spur gear 78 is fixed to the final output shaft 16. The first rotational shaft 80, the second rotational shaft 82 and the final output shaft 16 are supported by a first bearing 44, a second bearing 46 and a third bearing 48, respectively.

In this spur gear type speed increasing mechanism 70, the number of the teeth of the first spur gear 72 is set larger than the number of the teeth of the second spur gear 74 so that the rotational speed of the first rotational shaft 80 connected to the planetary output shaft 64 of the planetary type speed increasing mechanism 50 side is increased and transmitted to the second rotational shaft.

According to the gear box 14 arranged as above, the rotational speed input from the main shaft 12 of the rotor hub side can be increased by the planetary type speed increasing mechanism 50 and the spur gear type speed increasing mechanism 70, and transmitted to the final output shaft 16.

The inventors of the present invention had come up with their recognition that in the gear box 14 with the above structure, the endurance time of the self-aligning roller bearing 56 may become shorter due to the flaking in the gear box 14 having a construction as mentioned above. As a result of every research of the inventors, it was uncovered by the inventors that the decline of the endurance time of the bearings occurred was caused by changes of the load and the moment transmitted to the self-aligning roller bearings 56 from the blades 8 of the wind turbine generator 1 via the rotor head 6 and the main shaft 12 whereby the outer race 56B of the self-aligning roller bearing 56 comes out and therefore the load acted on each row 56c of bearings becomes imbalance with each other, thereby causing the flaking.

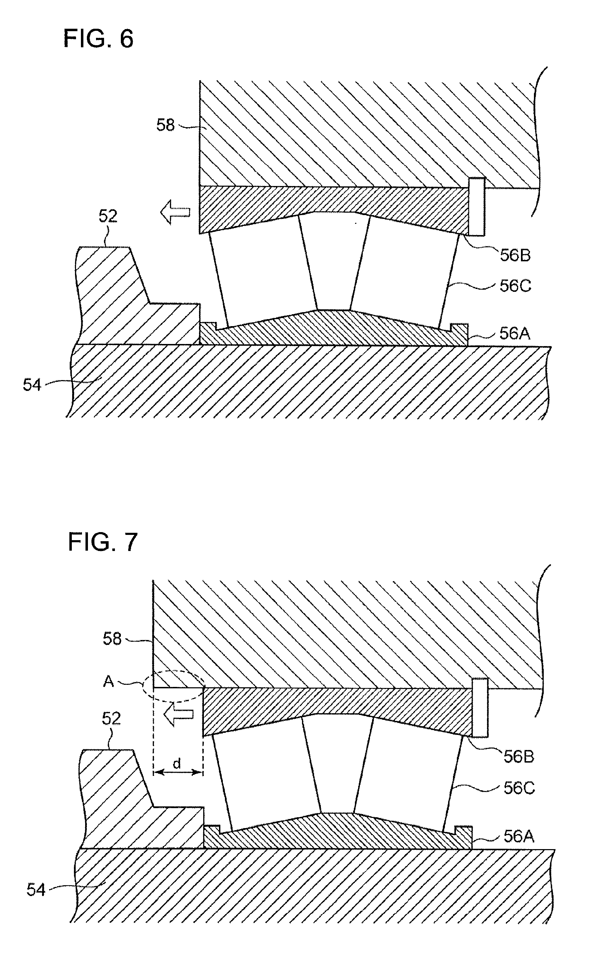

FIG. 6 is a sectional view showing coming out of the outer race 56B of the self-aligning roller bearing 56 causing the flaking. The self-aligning roller bearing 56 tends to come out outward (the direction with an arrow in the figure) in the axial direction by the load and the moment transmitted from the blades 8. The inner race 56A of the self-aligning roller bearing 56 is restrained from moving outward in the axial direction by the carrier 52. On the other hand, the outer race 56B of the self-aligning roller bearing 56 in not restrained from moving in such direction, and therefore only the outer race 56B is come out. Accordingly, the load is concentrated on the roller-row 56c located inside which is a right side row in FIG,6, and therefore the flaking of the self-aligning roller bearing 56 occurs.

In consideration of above, in the present embodiment, each of the planet gears 58 is fixed, as shown in Fig. 7, to the outer race 56B of the self-aligning roller bearing 58 with an interference fit so that the end surface of the planet gear 56B of the self-aligning roller bearing 56 is located inner side of the end surface of the planet gear 58 (i.e., the distance d between the end surface of the outer race 56B and the end surface of the planet gear 58 as shown in Fig. 7 is set to satisfy the inequality d>0). Thus, the end portion of the planet gear 58 is deformed by the interference fit to work as a lid to prevent the outer race 56B of the self-aligning roller bearings 56 from coming out and to keep the load acted on each roller-row 56C in even, and finally the decline of the endurance time of the self-aligning roller bearings 56 caused by the flaking can be suppressed.

It is preferable that the distance d between the end surface of the outer race 56B and the end surface of the planet gear 58 is as great as possible in the view of preventing the shortening of the life time of the planet bearing 56 (self-aligning roller bearing). However, if the end surface of the outer race 56B is set too close to the inner side of the end surface of the planet bearing 56, there is a structural limitation that the oil inlet port 54A for leading the lubrication oil into the pair of the planet bearings 56 may be obstructed. Therefore, it is preferable to set the above distance d in a range of 0mm<d≦ 10mm.

In the present invention, a manner of fixing the planet gear 58 to the outer race 56B of the self-aligning roller bearing 58 is not limited to a special fit and may adopt any fitting manner such as a shrink fit, a cooling fit or a press fit, etc. Above all, a shrink fit or a cooling fit is preferable for the fitting manner of the planet gear 58 in view point that damage of the self-aligning roller bearing 56 can be reduced more effectively, since a shrink fit or a cooling fit is possible to set a large amount of the interference so as to deform the end portion of the planet gear with a larger amount of the deformation, and therefore can prevent the outer race 56B of the self-aligning roller bearing 56 from coming out more firmly and further reduce the flaking of the self-aligning roller bearing 56

As described above, according to the embodiment, the planet gears 58 are fixed to each the outer race 56B of the self-aligning roller bearings 58 with an interference fit so that the end surface of each planet gear 56B of the self-aligning roller bearings 56 is located inner side of the end surface of each planet gears 58. Thus, the end portion of each planet gears 58 is deformed by the interference fit to work as a lid to prevent the outer race 56B of each self-aligning roller bearings 56 from coming out and to keep the load acted on each roller-row 56C in even, and finally flaking of the self-aligning roller bearings 56 can be reduced.

Having described the embodiment above, the present invention is not limited to the embodiment and may be appropriately modified without departing from the spirit and the scope of the invention.

For example, in the above embodiment, the end portion of the planet gear 58 is deformed by the interference fit so that the outer race 56B of the self-aligning roller bearing 56 is prevented from coming out by deforming. It is possible to provide a flange portion at the end portion of the planet gear so as to prevent the outer race 56B from coming out.

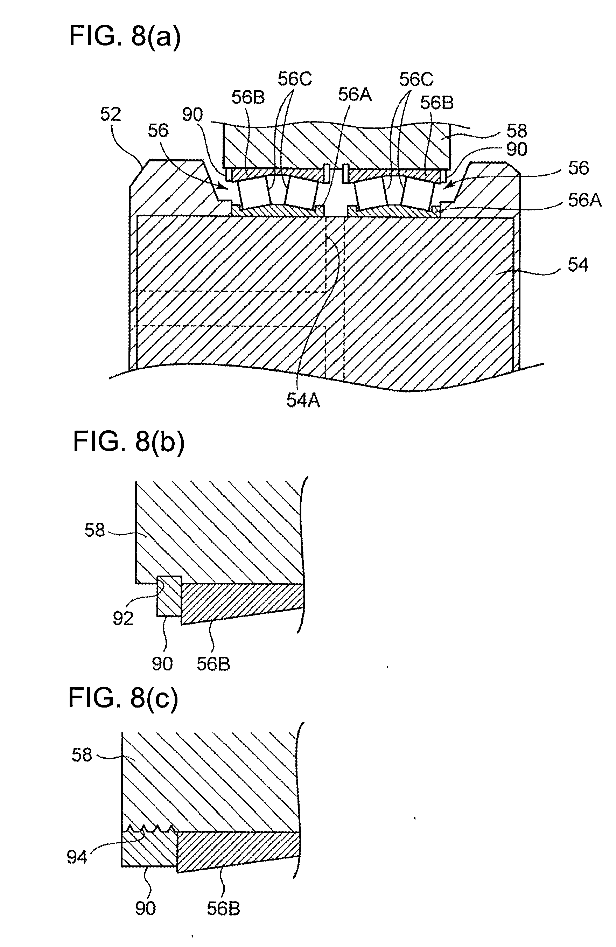

FIG. 8(a) is a sectional view showing the planet gear 58 equipped with the flange portion, Figs. 8(b) and 8(c) are enlarged views showing an example of structure of flange portions, respectively. It should be noted that the elements same as that of the above embodiment is denoted with the same reference numeral as used in the above embodiment.

As shown in Fig. 8(a), a flange portion 90 for preventing the outer race of the self-aligning roller bearing 56 from coming out is provided in a position between the end surface of the outer race 56B of the self-aligning roller bearing 56 and the end surface of the planet gear 58. According to such arrangement, the flange portion 90 is provided in the inner surface of the planet gear 58. Therefore, the outer race 56B of the self-aligning roller bearing 56 can be prevented more certainly from coming out, and thus the flaking of the self-aligning roller bearing 56 can be reduced.

For example, it is possible to adopt as the flange portion 90 a C-shaped snap ring fit into a groove 92 provided in the inner surface of the planet gear 58 as shown in Fig. 8(b), or a ring member screwed with a female screw 94 provided in the inner surface of the planet gear 58 as shown in Fig.8(c).

In Fig.8(a) to Fig.8(c) illustrated the example of the flange portion 90 being provided in a position between the end surface of the outer race 56B of the self-aligning roller bearing 56 and the end surface of the planet gear 58 and also in the inner surface of the end portion of the planet gear 58. However, the location of the flange portion 90 should not be limited to this arrangement as long as the flange portion 90 is arranged in a position which can prevent the outer race 56B from coming out. For instance, the flange portion 90 may be assembled to the end surface of the planet gear 58 by any method such as fixing with screws. By this, even if the end surface 56B of the self-aligning roller bearing coincide with the end surface of the planet gear 58, the flange portion can be fixed to the end surface of the planet gear 58 so as to prevent the outer race 56B from coming out.

### [Example]

The durability for the gear box 14 in the above embodiment has been evaluated as shown in the below by the inventors of the present invention, by measuring the time-dependent change of the coming out amount of the outer race 56B of the self-aligning roller bearing 56.

### [Example 1]

The gear box 14 of FIG.3 is assembled in such a manner that the end surface of the outer race 56B of the self-aligning roller bearing 56 is positioned inside 10 mm of the end surface of the planet gear 58 (i.e., d = 10 mm in Fig. 7). The interference fit of the planet gear 58 against the outer race 56B is performed in conditions that the amount of the interference is equal to P6 (0.012 to 0.079).

The load equal to torque with the average of 1.18 kNm is input from the main shaft (input shaft) 12 to the gear box 14 assembled as above. Then, after a predetermined time period elapsed, the amount of coming out of the outer race 56B of the self-aligning roller bearing 56 was measured.

### [Comparative Example 1]

The condition for the assembly and the input load is same as the above Sample 1 except that the end surface of the outer race 56B of the self-aligning roller bearing 56 and the end surface of the planet gear 58 are located at the same position (i.e., d=0 in FIG.7). Then, after the predetermined time period elapsed, the amount of coming out of the outer race 56B of the self-aligning roller bearing 56 was measured.

### [Evaluation of the durability]

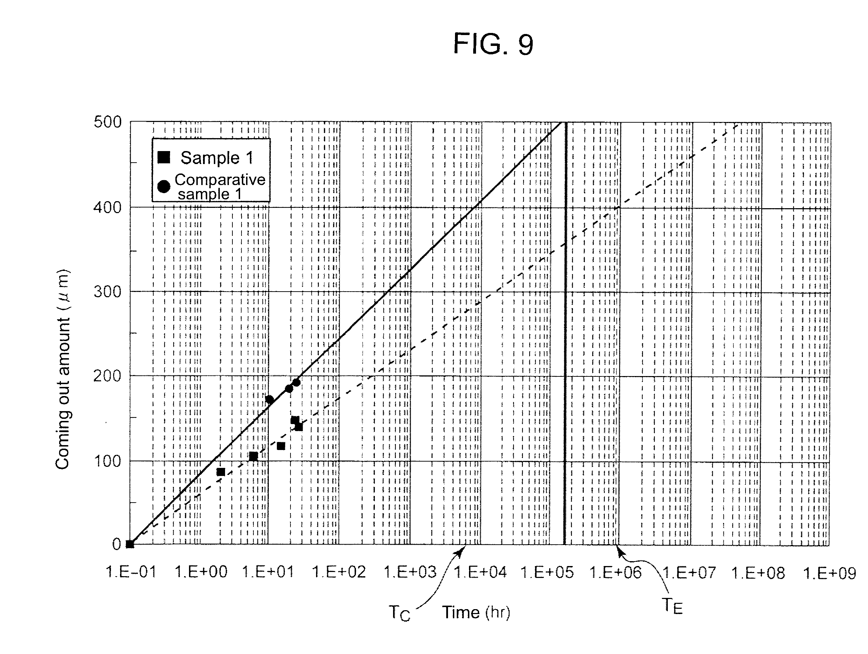

FIG. 9 is a graphic diagram showing the test result of Sample 1 and Sample 2.

Meanwhile, inventors have found through their research that flaking of the self-aligning roller bearing 56 is occurred when the amount of coming out of the outer race 56B reached to around 400 µm.

According to the fitting curve of the Example 1 and the Comparative Example 1, a time period that the amount of coming out of the outer race 56B reached about 400 µm of the Example 1 (T_{E}) is estimated approximately 109 times of that of the Comparative Example 1 (T_{C}). While the acceptance criterion is 1.3 × 10⁵ (hr) in the ordinal practical products, the Example 1 (T_{E}) satisfied this criterion, however, the Comparative Example 1 did not satisfy this criterion.

As mentioned above, in the gear box 14 of the present embodiment, each of the planet gears 58 is fixed to each outer race 56B of the self-aligning roller bearings 58 with an interference fit so that the end surface of each outer race 56B of the self-aligning roller bearings 56 is positioned inner side of the end surface of each planet gears 58, and thereby the outer race 56B of the self-aligning roller bearings 56 is prevented from coming out, and finally the decline of the endurance timeof the self-aligning roller bearings 56 caused by the flaking can be suppressed.

## Claims

1. A gear box for a wind turbine generator, having a main shaft coupled to a rotor head equipped with blades and rotated with the rotor head, comprising:
a casing;
a carrier having a plurality of planet pins and rotating with the main shaft of the wind turbine generator to revolve the planet pins;
self-aligning roller bearings installed to the pins of the carrier, respectively, each of the self-aligning roller bearings including a plurality of rows of rollers provided between an inner race and an outer race;
a plurality of planet gears supported rotatably to the planet pins via the self-aligning roller bearings, respectively;
a ring gear provided in the casing and having a inner tooth meshed with the planet gears; and
a sun gear provided to be surrounded by the planet gears and meshed with the planet gears,
wherein the planet gears are fixed to each outer race of the self-aligning bearings with an interference fit, respectively, so that an end surface of each outer race of the self-aligning bearings is positioned inner side of an end surface of each planet gear.

2. A gear box for a wind turbine generator according to claim 1, wherein the planet gears are fixed to each outer race of the self-aligning roller bearings with a shrink fit or cooling fit, respectively.

3. A gear box for a wind turbine generator according to any of claims 1 or 2,
wherein each of the planet gears is supported to the planet pin by a pair of the self-aligning roller bearings arranged with keeping a distance from each other, and
wherein the planet pin comprises an oil inlet port provided in a position between the pair of self-aligning roller bearings so as to lead lubricating oil into the pair of self-aligning roller bearings.

4. A gear box for a wind turbine generator, having a main shaft coupled to a rotor head equipped with blades and rotated with the rotor head, comprising:
a casing;
a carrier having a plurality of planet pins and rotating with the main shaft of the wind turbine generator to revolve the planet pins;
self-aligning roller bearings installed to the pins of the carrier, respectively, each of the self-aligning roller bearings including a plurality of rows of rollers provided between an inner race and an outer race;
a plurality of planet gears supported rotatably to the planet pins via the self-aligning roller bearings, respectively;
a ring gear provided in the casing and having a inner tooth meshed with the planet gears; and
a sun gear provided to be surrounded by the planet gears and meshed with the planet gears,
wherein each of the planet gears comprises a flange portion provided so as to prevent the outer race of the self-aligning roller bearing from coming out.

5. A gear box for a wind turbine generator according to claim 4, wherein the flange portion is a C-shaped snap ring fit into a groove provided in the inner surface of the planet gear.

6. A gear box for a wind turbine generator according to claim 4, wherein the flange portion is a ring member screwed with a female screw provided in the inner surface of the planet gear.

7. A wind turbine generator comprising:
a rotor head equipped with blades;
a main shaft coupled to the rotor head and rotating with rotor head;
the gear box according to claim 1 or 4 for increasing rotation speed to transmit rotation input from the main shaft to an output shaft; and
a generator coupled to the output shaft of the gear box.
